# EUROPÄISCHE PATENTSCHRIFT

(11) **EP 0 332 045 B1**
(45) Veröffentlichungstag und Bekanntmachung des Hinweises auf die Patenterteilung: **04.08.1993**
(21) Anmeldenummer: 89103619.6
(22) Anmeldetag: 02.03.1989
(51) Int. Cl.: G01S 17/88, G01S 7/00, G01S 7/48, E03C 1/05, E03D 5/10

(54) **Einrichtung zur berührungslosen Steuerung einer Sanitärarmatur**
Touch-free control device for sanitary fittings
Appareil de commande sans contact d'installations sanitaires

(30) Priorität: 08.03.1988 DE 3807484
(43) Veröffentlichungstag der Anmeldung: 13.09.1989
(73) Patentinhaber: HANSA METALLWERKE AG, D-70567 Stuttgart (DE)
(72) Erfinder: Maag, Horst, C.F., Dipl.-Ing., D-7036 Schönaich (DE)
(74) Vertreter: Ostertag, Ulrich

(56) Entgegenhaltungen:
- PATENT ABSTRACTS OF JAPAN, Band 6, Nr. 106 (M-213), 10. Oktober 1983; & JP-A-58 028 076 (MATSUSHITA)

## Beschreibung

Die Erfindung betrifft eine Einrichtung zur berührungslosen Steuerung einer Sanitärarmatur mit
a) einer Detektionseinheit, welche einen Sender und einen Empfänger enthält, die Anwesenheit eines Benutzers im Erfassungsbereich durch die am Benutzer reflektierte Strahlung feststellt und sodann Impulse auslöst, die der Ansteuerung eines Stellgliedes der Sanitärarmatur dienen.

Zur Charakterisierung der Funktionsweise derartiger Einrichtungen werden nachfolgend die Begriffe "Betriebsart" und "Betriebsparameter" verwendet. Diese sind wie folgt definiert:
Unter "Betriebsart" wird der Einsatz der Einrichtung in einem Verwendungszweck verstanden, der eine ganz bestimmte logische Abfolge der Ausgangsimpulse verlangt. Dies ist insbesondere der Fall, wenn die Detektionseinheit zur Steuerung unterschiedlicher Sanitärarmaturen (z.B. Waschtischarmatur, Urinal, Dusche usw.) eingesetzt werden soll. Jede dieser Betriebsarten erfordert eine bestimmte Logik in der Korrelation zwischen der Erfassung des Benutzers und dem zeitlichen Auftreten der zur Ansteuerung der Sanitärarmatur verwendeten Impulse, wobei ggf. geeignete Verzögerungs- und Zeitglieder Verwendung finden.

Unter "Betriebsparametern" werden solche internen Größen verstanden, die innerhalb derselben Betriebsart der Einrichtung auftreten können. Hierbei ist insbesondere an die Grundfrequenz gedacht, mit welcher der Sender betrieben wird. Von der Grundfrequenz zu unterscheiden sind die Impulsdauer und die Impulsfolge, mit welcher der Sender Strahlung in der Grundfrequenz ausstrahlt. Im allgemeinen wird nämlich zur Stromersparnis nicht kontinuierlich Strahlung ausgesandt. Weitere Betriebsparameter, die von Interesse sein können, sind etwa der Ladungszustand einer als Stromquelle verwendeten Batterie, die Empfindlichkeit (Erfassungsbereich) der Detektionseinheit oder auch die Position des Stellgliedes, welches von den Ausgangssignalen der Detektionseinheit beaufschlagt wird.

Eine Einrichtung zur berührungslosen Steuerung einer Sanitärarmatur der im Oberbegriff des Hauptanspruches angegebenen Gattung ist aus der DE-A-29 18 617 bekannt. Um zu verhindern, daß insbesondere die elektronischen Komponenten mutwillig beschädigt werden können, sind die zu schützenden Teile in einem stabilen schrankartigen Gehäuse eingebaut und dort über eine mit Spezialgeräten zu öffnende Tür zugänglich. Wartungs- und Umstellarbeiten an den Betriebsparametern und -arten erfolgen so, daß ein Fachmann die Tür mit den Spezialgeräten öffnet und danach von Hand die erforderlichen Arbeiten durchführt. Diese Einstellungsarbeiten erfordern erhebliche Sachkenntnis, die nicht in allen Fällen vorausgesetzt werden kann. Außerdem ist die Einbringung der elektronischen Komponenten in ein schrankartiges Gehäuse bei vielen Einsatzzwecken nicht möglich.

Aufgabe der vorliegenden Erfindung ist es, eine Einrichtung zur berührungslosen Steuerung einer Sanitärarmatur der im Oberbegriff des Hauptanspruches angegebenen Art so auszugestalten, daß sie sich für alle denkbaren Betriebsarten eignet und leicht und problemlos vor Ort auf die erforderlichen Betriebsparameter einstellbar ist und gleichzeitig die Informationen über ihre Betriebsart und/oder die Betriebsparameter einfach zugänglich macht.

Diese Aufgabe wird erfindungsgemäß dadurch gelöst, daß
b) eine mit Strahlung arbeitende Fernbedienungseinheit vorgesehen ist, welche selbst einen Sender und einen Empfänger enthält, wobei die Detektionseinheit und die Fernbedienungseinheit eingerichtet sind, Informationen und Befehle über die Betriebsart und/oder die Betriebsparameter der Detektionseinheit dialogartig auszutauschen, wobei
c) die Detektionseinheit in einem Gehäuse gekapselt ist, welches keine von außen manuell zugänglichen Bedienungselemente aufweist, wodurch die Veränderungen der Betriebsart und/oder der Betriebsparameter der Detektionseinheit ausschließlich über die zwischen der Detektionseinheit und der Fernbedienungseinheit ausgetauschte Strahlung erfolgt und die Detektionseinheit und die Fernbedienungseinheit durch Steuereinrichtungen für den beidseitigen Austausch der Informationen zwischen der Detektionseinheit und der Fernbedienungseinheit auch außerhalb der Zeiten eingerichtet ist, in denen die Detektionseinheit die Anwesenheit eines Benutzers in ihrem Erfassungsbereich feststellt.

Erfindungsgemäß wird die Einrichtung zur berührungslosen Steuerung einer Sanitärarmatur als "Einheitsgerät" ausgestaltet, welches für alle Betriebsarten grundsätzlich geeignet ist. In einem internen Speicher sind diese Betriebsarten abgelegt und können durch entsprechende Kommandos aufgerufen werden. Die elektronischen Komponenten können vollständig eingekapselt werden; manuelle Bedienungselemente sind nicht mehr erforderlich, da erfindungsgemäß alle Informationsflüsse über die zwischen der Detektionseinheit und der Fernbedienungseinheit ausgetauschte Strahlung durch dieselben Fenster der Detektionseinheit erfolgen, die im Normalbetrieb der Erfassung eines Benutzers dienen. Insbesondere wird die Betriebsart der Detektionseinheit, die jeweils gewünscht wird, durch einen Tastendruck an der Fernbedienungseinheit aufgerufen. Auch Einstellungs- und Justierarbeiten erfolgen über Strahlung, die von der Fernbedienungseinheit ausgesandt und von der Detektionseinheit in richtiger Weise verstanden wird. Umgekehrt gibt die Detektionseinheit auf dem Strahlungswege alle Informationen über die jeweils aktuelle Betriebsart und die Betriebsparameter nach außen.

Bei einer Ausgestaltung der Erfindung ist es möglich, daß die vom Sender der Detektionseinheit ausgesandte Strahlung dauernd Informationen über die Betriebsart und/oder die Betriebsparameter der Detektionseinheit trägt. Der Schaltungsaufwand ist bei dieser Bauweise am geringsten; für die Funktion der vom Sender der Detektionseinheit ausgesandten Strahlung bei der Erfassung eines Benutzers ist es völlig unerheblich, ob diese Strahlung auch (dauernd) noch eine Zusatzinformation mit sich führt.

Alternativ ist es aber auch möglich, daß die vom Sender der Detektionseinheit ausgesandte Strahlung nur dann mit Informationen über die Betriebsart und/oder die Betriebsparameter versehen wird, wenn zuvor ein entsprechender Befehl von der Fernbedienungseinhet zur Detektionseinheit übermittelt wurde. In jedem Falle ist es aber zur Informationsübermittlung nicht erforderlich, daß zuvor ein Benutzer im Erfassungsbereich registriert wird.

Die Informationen über die Betriebsart und die Betriebsparameter der Detektionseinheit können bei einem Ausführungsbeispiel der Erfindung einzeln durch einen entsprechenden Befehl der Fernbedienungseinheit aufgerufen und abgefragt werden.

Die Fernbedienungseinheit sollte ein Display aufweisen, an welchem die von der Detektionseinheit übermittelten Informationen sichtbar gemacht werden können.

Umgekehrt sollte die Fernbedienungseinheit ein Eingabefeld zur manuellen Eingabe der verschiedenen Befehle aufweisen.

In diesem Falle kann das Display auch zur Kontrolle der eingegebenen Befehle dienen.

In vielen heute gebräuchlichen Fällen arbeiten die Einrichtungen zur berührungslosen Steuerung einer Sanitärarmatur mit Infrarotlicht als Strahlung. Dann kann die Gesamtanordnung dadurch besonders vandalensicher gemacht werden, daß die das Eintrittsfenster und das Austrittsfenster enthaltende Frontplatte der Detektionseinheit aus einem Material besteht, welches im Infrarotbereich durchlässig, im Bereich des sichtbaren Lichtes dagegen undurchlässig ist und keine von außen erkennbaren Öffnungen, insbesondere auch nicht in der Zone des Eintrittsfensters und des Austrittsfensters, aufweist. Erkennbare optische Fenster stellten sich nämlich, wie die Erfahrung zeigte, in der Vergangenheit als besondere Ansatzpunkte für mutwillige Zerstörungen heraus. Derartige Fenster sind bei der erfindungsgemäßen Einrichtung in der Ausgestaltung nach Anspruch 7 nicht mehr erkennbar.

Besonders einfach wird der Gesamtaufbau in diesem Falle dann, wenn die Frontplatte im Bereich des Eintrittsfensters und des Austrittsfensters als Linse geformt ist. Zusätzliche abbildende Elemente sind dann nicht mehr erforderlich.

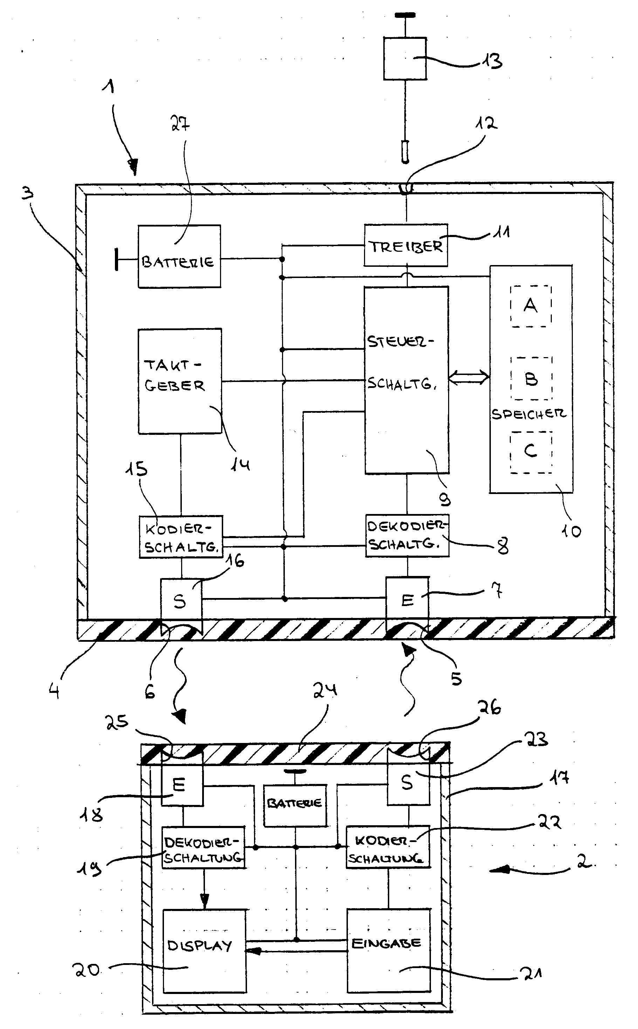

Ein Ausführungsbeispiel der Erfindung wird nachfolgend anhand der Zeichnung näher erläutert; die einzige Figur zeigt schematisch eine Einrichtung zur berührungslosen Steuerung einer Sanitärarmatur.

Die in der Zeichnung dargestellte Einrichtung zur berührungslosen Steuerung einer Sanitärarmatur umfaßt eine Detektionseinheit 1 sowie eine Fernbedienungseinheit 2.

Die Detektionseinheit 1 ist in einem Gehäuse 2 vollständig gekapselt, weist also insbesondere keine äußeren, manuell zu betätigenden Bedienungs- oder Einstellelemente auf. Alle Justier-, Bedienungs- oder Programmiervorgänge werden berührungslos in noch zu beschreibender Weise vorgenommen. Die die dem Benutzer zugewandte Seite des Gehäuses 3 wird durch eine Frontplatte 4 gebildet, die aus einem besonderen Kunststoffmaterial besteht. Dieses Material ist durchlässig für infrarotes, nicht jedoch für sichtbares Licht. Auf diese Weise ist von außen her nicht erkennbar, an welchen Stellen der Frontplatte 4 sich das Eintrittsfenster 5 bzw. das Austrittsfenster 6 für die der Detektion dienende Infrarotstrahlung befindet. Dieses Merkmal trägt zusätzlich zur Vermeidung mutwilliger Zerstörungen bei, da häufig gerade die erkennbaren optischen Eintritts- und Austrittsfenster bekannter Armaturen zum Ziel mutwilliger Beschädigungen gemacht werden.

Das Kunststoffmaterial der Frontplatte 4 ist im Bereich der Eintritts- bzw. Austrittsöffnung 5,6 als Linse geformt, so daß zusätzliche optische Abbildungselemente erübrigt werden können.

Im Inneren des Gehäuses 3 der Detektionseinheit 1 sind alle zum Betrieb erforderlichen elektronischen Schaltkreise eingekapselt.

Das durch das Eintrittsfenster 5 der Frontplatte 4 des Gehäuses 3 eintretende Infrarotlicht trifft zunächst auf einen Empfänger 7, der in bekannter Weise eine Empfangsdiode sowie einen geeigneten Verstärker für das von der Empfangsdiode erzeugte Signal enthält. Das Ausgangssignal des Empfängers 7 wird einer Dekodierschaltung 8 zugeführt, deren Funktion im einzelnen nachfolgend erläutert wird. Der Ausgang der Dekodierungschaltung 8 ist mit einem Eingang einer Steuerschaltung 9 verbunden, die Zugriff auf einen Speicher 10 hat.

Die Steuerschaltung 9 erzeugt in noch zu beschreibender Weise Ausgangssignale, welche einem Treiber 11 zugeführt werden. Der Ausgang des Treibers 11 ist an eine Steckbuchse 12 gelegt, an welcher das Stellglied 13 der zu steuernden Sanitärarmatur anschließbar ist.

Im Sendezweig der in der Detektionseinheit 1 enthaltenen Schaltungsanordnung findet sich ein Taktgeber 14, welcher Impulse mit einer bestimmten Grundfrequenz in einer bestimmten Taktfolge an eine Kodierschaltung 15 abgibt. Der Taktgeber 14 ist dabei in einer Weise, die ebenfalls noch erläutert wird, von der Steuerschaltung 9 aus beeinflußbar und hierzu mit letzterer über eine Leitung verbunden.

Auch die Kodierschaltung 15 empfängt Befehle von der Steuerschaltung 9 und prägt den vom Taktgeber 14 abgegebenen Impulsen eine bestimmte Kodierung auf. Diese Kodierung kann grundsätzlich in jeder Form, die zur Informationsübertragung geeignet ist, erfolgen.

Die von der Kodierschaltung 15 kodierten Impulse werden auf einen Sender 16 gegeben, in dem geeignete Vorverstärker sowie eine Sendediode in bekannter Weise enthalten sind. Das von der Sendediode erzeugte Licht wird dann über das Austrittsfenster 6 durch die Frontplatte 4 abgestrahlt.

Die "Grundfunktion" der beschriebenen Schaltungsanordnung stimmt mit derjenigen bekannter Einrichtungen, die keine Kodierschaltung 15, keine Dekodierschaltung 8 und keinen Speicher 10 enthalten, im wesentlichen überein: Der Taktgeber 14 erzeugt Impulse, die vom Sender 16 in entsprechende Lichtimpulse umgesetzt werden. Befindet sich ein Benutzer innerhalb des Erfassungsbereichs der Detektionseinheit 1, so gelangt an ihm reflektiertes Licht durch das Eintrittsfenster 5 auf den Empfänger 7. Die das Ausgangssignal des Empfängers 7 verarbeitende Steuerschaltung erzeugt einen Ausgangsimpuls oder eine Ausgangsimpulsfolge mit einem vorgegebenen zeitlichen Ablauf, der bzw. die vom Treiber 11 verstärkt und an das Stellglied 13 der Sanitärarmatur abgegeben wird.

Die bei der vorliegend beschriebenen Einrichtung zusätzlich enthaltene Kodierschaltung 15, die Dekodierschaltung 8 sowie der Speicher 10 dienen dem Dialog mit der Fernbedienungseinheit 2, wie weiter unten deutlich werden wird.

Die Fernbedienungseinheit 2 umfaßt, ebenfalls in einem Gehäuse 17 gekapselt, verschiedene Schaltungskreise, die zum Abfragen von Informationen aus der Detektionseinheit 1 bzw. zum Programmieren der Detektionseinheit 1 erforderlich sind. Im einzelnen handelt es sich um einen Empfänger 18, der eine Dekodierschaltung 19 nachgeschaltet ist. Die in dem dekodierten Signal enthaltene Information wird auf einem Display 20 angezeigt.

Der Sendezweig der Fernbedienungseinheit 2 umfaßt ein Eingabefeld 21 mit verschiedenen Tasten, über welche sich in geeigneter Programmierung verschiedene gewünschte Funktionen aufrufen lassen. Die eingegebenen Funktionen lassen sich ggf. auf dem Display 20 zur Kontrolle sichtbar machen. Das Ausgangssignal des Eingabefeldes 21 wird über eine Kodierschaltung 22 in eine geeignet kodierte Impulsfolge umgesetzt, die dann auf einen Sender 23 gegeben wird.

Sender 23 und Empfänger 18 der Fernbedienungseinheit 2 können grundsätzlich ähnlich aufgebaut sein wie der Sender 16 und der Empfänger 7 der Detektionseinheit 1. Wie diese sind auch der Empfänger 18 und der Sender 23 der Fernbedienungseinheit 2 an einem Eintrittsfenster 25 bzw. einem Austrittsfenster 26 einer Frontplatte 24 angebracht, die aus Infrarotlicht-durchlässigem Kunststoffmaterial besteht. Wiederum ist dieses im Bereich des Eintrittsfensters 25 sowie des Austrittsfensters 26 zu einer Linse geformt.

Die Fernbedienungseinheit 2 und die Detektionseinheit 1 können nunmehr in folgender Weise durch Austausch von Informationen, die in der Kodierung des zwischen ihnen in beiden Richtungen übertragenen Lichtes enthalten ist, in Dialog treten:
Zum Verständnis der nachfolgenden Ausführungen sei vorausgeschickt, daß die oben beschriebene Detektionseinheit 1 als sogenanntes "Einheitsgerät" eingesetzt werden soll, also bei unterschiedlichsten Betriebsarten und Betriebsparametern Verwendung finden soll. Die erforderlichen Impulsfolgen sowie die zugehörigen Codes sind in den Unterspeichern A, B, C des Speichers 10 in der Detektionseinheit 1 eingespeichert.

Die Kodierschaltung 15 sowie die Dekodierschaltung 8 der Detektionseinheit 1 dienen nun gemeinsam mit der Fernbedienungseinheit 2 dazu, einerseits Informationen über die Betriebsart und die jeweiligen interessierender Betriebsparameter aus der Detektionseinheit 1 herauszutransportieren und zu erfassen, andererseits dazu, von außen her Veränderungen an der Betriebsart bzw. den Betriebsparametern vorzunehmen.

Im einzelnen geschieht dies beim dargestellten Ausführungsbeispiel wie folgt:
Der Taktgeber 14 der Detektionseinheit 1 sendet beim Normalbetrieb in üblicher Weise Impulse mit einer bestimmten Grundfrequenz, mit einer bestimmten Breite und mit einer bestimmten Wiederholungsfrequenz aus. Diesen Impulsen werden in der Kodierschaltung 15 Informationen über die interessierenden Betriebsparameter sowie die Betriebsart aufgeprägt. Beispielsweise enthält so das Sendelicht, welches vom Sender 16 abgestrahlt wird, dauernd eine Information darüber, daß die Detektionseinheit in der Betriebsart A (z.B. Urinal) arbeitet, daß der Ladungszustand der Batterie 27 gut ist, und daß der Taktgeber mit einer bestimmten Grundfrequenz arbeitet. Zusätzliche Informationen können beispielsweise (bei Verwendung geeigneter Sensoren) die Position des Stellgliedes 13 betreffen. Im üblichen Betrieb bleiben die vom Sender 16 ausgestrahlten zusätzlichen Informationen ungenutzt. Zwar trägt das am Benutzer reflektierte Licht, welches auf den Empfänger 7 trifft, ebenfalls die von der Kodierschaltung 15 hervorgerufenen Codes; diese lösen aber in der Dekodierschaltung 8 keine Funktion aus.

Die Benutzungsweise der Detektionseinheit 1 entspricht so vollständig dem Bekannten.

Wenn jedoch außerhalb des Normalbetriebes die Betriebsart, auf welche die Detektionseinheit 1 eingestellt ist, sowie die aktuellen Betriebsparameter abgefragt werden sollen, wird die Fernbedienungseinheit 2 in die Nähe der Detektionseinheit 1 gebracht. Die Entfernung der Fernbedienungseinheit 2 von der Detektionseinheit 1 kann dabei so groß sein, daß durch die Reflexion an der Fernbedienungseinheit 2 bzw. der Bedienungsperson das Stellglied 13 nicht betätigt wird.

Dies ist schon bei gleicher Empfindlichkeit der Empfänger 18 und 7 in der Fernbedienungseinheit 2 und in der Detektionseinheit 1 leicht deshalb möglich, weil die Fernbedienungseinheit 2 ja das Licht nicht über Reflexion sondern durch Direkteinstrahlung empfängt. Die Abfragemöglichkeit auch außerhalb der "Schaltzeiten" der Detektionseinheit 1 ist wichtig, da selbstverständlich die Informationen nicht erst dann abgefragt werden sollen, wenn etwa ein Benutzer unter dem fließenden Wasser einer Dusche steht.

Die Lichtsignale, welche der Empfänger 18 der Fernbedienungseinheit 2 empfängt, werden in der Dekodierschaltung 19 dekodiert. Die enthaltenen Informationen werden sodann auf dem Display 20 angezeigt. Hier ist also beispielsweise die Grundfrequenz, bei welcher der Taktgeber 14 arbeitet, die Betriebsart (z.B. Urinal) oder auch der Ladungszustand der Batterie 27 ablesbar.

Soll die derzeit aktuelle Betriebsart oder sollen gewisse aktuelle Betriebsparameter verändert werden, so geschieht dies durch den Sendezweig der Schaltungsanordnung, die in der Fernbedienungseinheit 2 enthalten ist. Mittels der auf dem Eingabefeld 21 enthaltenen Tastatur wird beispielsweise eine neue Betriebsart angewählt. Die Kodierschaltung 22 erzeugt nun ein Signal mit einem bestimmten Code, welches vom Sender 23 in entsprechend kodierte Lichtstrahlen umgesetzt wird. Diese Lichtstrahlen werden vom Empfänger 7 zunächst in gleicher Weise empfangen wie solche Signale, die von einem Benutzer der Sanitärarmatur reflektiert werden. Die Dekodierschaltung 8 in der Detektionseinheit 1 stellt jedoch fest, daß die empfangene Lichtstrahlung einen bestimmten Befehl enthält. Er veranlaßt die Steuerschaltung 9, diesen Befehl auszuführen. Betrifft also beispielsweise das über das Eingabefeld 21 eingegebene Kommando den Wechsel zur Betriebsart B (z.B. Dusche), so gibt die Dekodierschaltung 8 an die Steuerschaltung 9 den Impuls, aus dem Speicher 10 den Unterspeicher B auszulesen und dieser Betriebsart angepaßte Impulsfolgen an den Treiber 11 abzugeben.

Ein weiterer Befehl, der über das Eingabefeld 21 an die Detektionseinheit 1 gegeben werden kann, betrifft die Grundfrequenz, bei welcher der Taktgeber 14 arbeitet. Die Einstellung der Grundfrequenz "vor Ort" kann dann von Bedeutung sein, wenn in einem einzigen Raum mehrere Detektionseinheiten 1 nebeneinander und unabhängig voneinander betrieben werden sollen. Durch die Wahl unterschiedlicher Grundfrequenzen können gegenseitige Beeinflussungen in bekannter Weise vermieden werden.

Eine dritte Gruppe von Kommandos, welche über das Eingabefeld 21 der Fernbedienungseinheit 2 an die Detektionseinheit 1 übermittelt werden kann, betrifft die Empfindlichkeit der Detektionseinheit 1. Diese ist gleichbedeutend mit dem räumlichen Erfassungsbereich, in dem die Detektionseinheit 1 anspricht. Auch dieser muß vor Ort den jeweiligen Gegebenheiten angepaßt werden können.

Mit einer vierten Kommandogruppe schließlich lassen sich die Dauern der einzelnen Impulse bzw. der Pausen zwischen diesen in den einzelnen Betriebsarten individuell einstellen. Beim oben beschriebenen Ausführungsbeispiel wurden vom Sender 16 der Detektionseinheit 1 zu allen Zeiten Signale ausgesandt, welche sämtliche Informationen über die Betriebsart und die Betriebsparameter gleichzeitig enthielten. Die Anordnung kann auch so getroffen werden, daß nur zu bestimmten Zeiten, die durch einen Impuls der Fernbedienungseinheit 2 bestimmt werden, die in Rede stehenden Informationen dem Sendelicht der Detektionseinheit 1 aufgeprägt werden. Dabei können Betriebsart und Betriebsparameter ggf. auch einzeln abgefragt werden.

Während bei dem in der Zeichnung dargestellten Ausführungsbeispiel die Batterie 27 in dem Gehäuse 3 der Detektionseinheit 1 integriert war, läßt sich diese auch aus dem Gehäuse ausgliedern, was beim Batterietausch von Nutzen sein kann. Selbstverständlich ist es auch möglich, die beschriebene Schaltungsanordnung mit einer geeigneten Stromversorgung vom Netz aus zu betreiben.

## Patentansprüche

1. Einrichtung zur berührungslosen Steuerung einer Sanitärarmatur mit
a) einer Detektionseinheit (1), welche einen Sender (16) und einen Empfänger (7) enthält, die Anwesenheit eines Benutzers im Erfassungsbereich durch die am Benutzer reflektierte Strahlung feststellt und sodann Impulse auslöst, die der Ansteuerung eines Stellgliedes (13) der Sanitärarmatur dienen,
dadurch gekennzeichnet, daß
b) eine mit Strahlung arbeitende Fernbedienungseinheit (2) vorgesehen ist, welche selbst einen Sender (23) und einen Empfänger (18) enthält, wobei die Detektionseinheit (1) und die Fernbedienungseinheit (2) eingerichtet sind, Informationen und Befehle über die Betriebsart und/oder die Betriebsparameter der Detektionseinheit (1) dialogartig auszutauschen,
wobei
c) die Detektionseinheit (1) in einem Gehäuse (3) gekapselt ist, welches keine von außen manuell zugänglichen Bedienungselemente aufweist, wodurch die Veränderungen der Betriebsart und/oder der Betriebsparameter der Detektionseinheit (1) ausschließlich über die zwischen der Detektionseinheit (1) und der Fernbedienungseinheit (2) ausgetauschte Strahlung erfolgt und die Detektionseinheit (1) und die Fernbedienungseinheit (2) durch Steuereinrichtungen (9, 21, 22) für den beidseitigen Austausch der Informationen zwischen der Detektionseinheit (1) und der Fernbedienungseinheit (2) auch außerhalb der Zeiten eingerichtet sind, in denen die Detektionseinheit (1) die Anwesenheit eines Benutzers in ihrem Erfassungsbereich feststellt.

2. Einrichtung nach Anspruch 1, dadurch gekennzeichnet,
daß die vom Sender (16) der Detektionseinheit (1) ausgesandte Strahlung dauernd Informationen über die Betriebsart und/oder die Betriebsparameter der Detektionseinheit (1) trägt.

3. Einrichtung nach Anspruch 1, dadurch gekennzeichnet,
daß die vom Sender (16) der Detektionseinheit (1) ausgesandte Strahlung nur dann mit Informationen über die Betriebsart und/oder die Betriebsparameter versehen wird, wenn zuvor ein entsprechender Befehl von der Fernbedienungseinheit (2) zur Detektionseinheit (1) übermittelt wurde.

4. Einrichtung nach Anspruch 3, dadurch gekennzeichnet,
daß die Informationen über die Betriebsart und die Betriebsparameter der Detektionseinheit (1) einzeln durch einen entsprechenden Befehl der Fernbedienungseinheit (2) aufgerufen und abgefragt werden können.

5. Einrichtung nach einem der vorhergehenden Ansprüche,
dadurch gekennzeichnet, daß die Fernbedienungseinheit (2) ein Display (20) aufweist, an welchem die von der Detektionseinheit (1) übermittelten Informationen sichtbar gemacht werden können.

6. Einrichtung nach einem der vorhergehenden Ansprüche, dadurch
gekennzeichnet, daß die Steuereinrichtung der Fernbedienungseinheit (2) ein Eingabefeld (21) zur manuellen Eingabe der verschiedenen Befehle aufweist.

7. Einrichtung nach einem der vorhergehenden Ansprüche,
welche mit Infrarotlicht als Strahlung arbeitet, dadurch gekennzeichnet, daß die das Eintrittsfenster (5) und das Austrittsfenster (6) enthaltende Frontplatte (4) der Detektionseinheit (1) aus einem Material besteht, welches im Infrarotbereich durchlässig, im Bereich des sichtbaren Lichtes dagegen undurchlässig ist und keine von außen erkennbaren Öffnungen, insbesondere auch nicht in der Zone des Eintrittsfensters (5) und des Austrittsfensters (6) aufweist.

8. Einrichtung nach Anspruch 7, dadurch gekennzeichnet,
daß die Frontplatte (4) im Bereich des Eintrittsfensters (5) und des Austrittsfensters (6) als Linse geformt ist.

## Claims

1. Device for the touch-free control of a sanitary fitting, comprising
a) a detection unit (1) which contains an emitter (16) and a receiver (7), detects the presence of a user in the detection area by the radiation reflected by the user and thereupon releases pulses which serve to trigger an actuator (13) of the sanitary fitting,
characterised in that
b) a remote control unit (2) operating with radiation is provided which itself contains an emitter (23) and a receiver (18), wherein the detection unit (1) and the remote control unit (2) are adapted to exchange information and commands regarding the operating mode and/or the operating parameters of the detection unit (1) in the manner of a dialogue,
wherein
c) the detection unit (1) is encased in a housing (3) having no operating elements that are manually accessible from the outside, whereby the changes in the operating mode and/or the operating parameters of the detection unit (1) are effected exclusively by means of the radiation exchanged between the detection unit (1) and the remote control unit (2), and the detection unit (1) and the remote control unit (2) are adapted by means of control devices for the mutual exchange of information between the detection unit (1) and the remote control unit (2) also outside the times at which the detection unit (1) detects the presence of a user in its detection area.

2. Device according to claim 1, characterised in that the radiation sent from the emitter (16) of the detection unit (1) continuously carries information on the operating mode and/or the operating parameters of the detection unit (1).

3. Device according to claim 1, characterised in that the radiation sent from the emitter (16) of the detection unit (1) is provided with information on the operating mode and/or the operating parameters only when a corresponding command has previously been transmitted from the remote control unit (2) to the detection unit (1).

4. Device according to claim 3, characterised in that the information on the operating mode and the operating parameters of the detection unit (1) can be called and ascertained individually by a corresponding command of the remote control unit (2).

5. Device according to one of the preceding claims, characterised in that the remote control unit (2) has a display (20) on which the information transmitted from the detection unit (1) can be displayed.

6. Device according to one of the preceding claims, characterised in that the control device of the remote control unit (2) has an input panel (21) for manually entering the various commands.

7. Device according to one of the preceding claims that operates with infrared light as radiation, characterised in that the front panel (4) of the detection unit (1), which contains the inlet window (5) and the outlet window (6) consists of a material that is transparent in the infrared range but non-transparent in the range of visible light and does not have any openings that are visible from the outside, especially not in the zone of the inlet window (5) and the outlet window (6).

8. Device according to claim 7, characterised in that the front panel (4) is formed as a lens in the region of the inlet window (5) and the outlet window (6).

## Revendications

1. Appareil de commande sans contact d'une installation sanitaire, avec
a) une unité de détection (1), qui contient un émetteur (16) et un récepteur (7), qui établit la présence d'un utilisateur dans la zone de détection au moyen du rayonnement réfléchi sur l'utilisateur, et qui déclenche alors des impulsions servant à asservir un organe d'actionnement (13) de l'installation sanitaire,
**caractérisé**
b) en ce qu'il est prévu une unité de télécommande (2) fonctionnant par rayonnement, qui contient elle-même un émetteur (23) et un récepteur (18), l'unité de détection (1) et l'unité de télécommande (2) étant conçues pour échanger, sur un mode de dialogue, des informations et des ordres concernant le type de service et/ou les paramètres de service de l'unité de détection (1),
c) l'unité de détection (1) étant totalement enfermée dans un boîtier (3) ne présentant pas d'éléments de commande accessibles manuellement de l'extérieur, de sorte que les modifications du type de service et/ou des paramètres de service de l'unité de détection (1) s'effectuent exclusivement par l'intermédiaire du rayonnement échangé entre l'unité de détection (1) et l'unité de télécommande (2), et l'unité de détection (1) et l'unité de télécommande (2) étant conçues, au moyen de dispositifs de commande (9, 21, 22), pour l'échange bilatéral d'informations entre l'unité de détection (1) et l'unité de télécommande (2) même en dehors des périodes pendant lesquelles l'unité de détection (1) établit la présence d'un utilisateur dans sa zone de détection.

2. Appareil selon la revendication 1, **caractérisé** en ce que le rayonnement émis par l'émetteur (16) de l'unité de détection (1) porte en permanence des informations sur le type de service et/ou les paramètres de service de l'unité de détection (1).

3. Appareil selon la revendication 1, **caractérisé** en ce que le rayonnement émis par l'émetteur (16) de l'unité de détection (1) n'est pourvu d'informations sur le type de service et/ou les paramètres de service que si un ordre correspondant a été préalablement transmis par l'unité de télécommande (2) à l'unité de détection (1).

4. Appareil selon la revendication 3, **caractérisé** en ce que les informations sur le type de service et les paramètres de service de l'unité de détection (1) peuvent être individuellement appelées et interrogées par un ordre correspondant de l'unité de télécommande (2).

5. Appareil selon l'une quelconque des revendications précédentes, **caractérisé** en ce que l'unité de télécommande (2) présente un affichage (20), sur lequel peuvent être visualisées les informations transmises par l'unité de détection (1).

6. Appareil selon l'une quelconque des revendications précédentes, **caractérisé** en ce que le dispositif de commande de l'unité de télécommande (2) présente un champ d'introduction de données (21) pour l'introduction manuelle des différents ordres.

7. Appareil selon l'une quelconque des revendications précédentes, utilisant la lumière infrarouge comme source de rayonnement, **caractérisé** en ce que la plaque frontale (4) de l'unité de détection (1), qui contient la fenêtre d'entrée (5) et la fenêtre de sortie (6), est réalisée en un matériau qui laisse passer la lumière infrarouge, mais non la lumière visible, et qui ne présente pas d'ouvertures décelables de l'extérieur, notamment pas non plus dans la zone de la fenêtre d'entrée (5) et de la fenêtre de sortie (6).

8. Appareil selon la revendication 7, **caractérisé** en ce que la plaque frontale (4) est réalisée en forme de lentille dans la région de la fenêtre d'entrée (5) et de la fenêtre de sortie (6).
